# EUROPÄISCHE PATENTSCHRIFT

(11) **EP 3 500 786 B1**
(45) Veröffentlichungstag und Bekanntmachung des Hinweises auf die Patenterteilung: **26.01.2022**
(21) Anmeldenummer: 17754359.2
(22) Anmeldetag: 18.08.2017
(51) Int. Cl.: F16L 21/08

(54) **SICHERUNGSKRALLE**
CLAWED SECURING MEANS
GRIFFE DE FIXATION

(30) Priorität: 22.08.2016 DE 102016115536
(43) Veröffentlichungstag der Anmeldung: 26.06.2019
(73) Patentinhaber: NORMA Germany GmbH, 63477 Maintal (DE)
(72) Erfinder: KRÄMER, Markus, 63533 Mainhausen (DE); LECBYCH, Miroslav, 69185 Dolni Dunajovice (CZ)
(74) Vertreter: Patentanwälte Olbricht Buchhold Keulertz
(86) Internationale Anmeldenummer: PCT/EP2017/070974
(87) Internationale Veröffentlichungsnummer: WO 2018/036937

(56) Entgegenhaltungen:
- EP-A1- 1 245 889
- EP-A1- 1 568 930
- WO-A2-2005/079297
- DE-A1-102008 010 871
- FR-A1- 2 920 495
- US-A- 1 479 317

## Beschreibung

Die Erfindung betrifft eine Sicherungskralle gemäß dem Oberbegriff von Anspruch 1. Sicherungskrallen mit radial nach innen gerichteten Kralleneinlagen werden insbesondere zur axialen Zugsicherung von muffenlosen Rohren, beispielweise aus Gusseisen, eingesetzt, die mit handelsüblichen Verbindern gemäß EN 877 verbunden werden. Eine solche Sicherungskralle ist beispielweise in EP 1 568 930 B1 oder DE 102008010871 A1 gezeigt.

Häufig bestehen Sicherungskrallen aus zwei Hälften, die an ihren Enden Spannbacken aufweisen. Die jeweils gegenüberliegenden Spannbacken der beiden Hälften werden mit Hilfe von Spannelementen zueinander befestigt und verspannt. Zur Stabilisierung der Spannelemente, insbesondere Schrauben, sind meist zusätzliche Ausrichtungselemente und Platten zur Verschraubung vorgesehen. Nachteilig hierbei ist, dass die Herstellung und Montage aufwendig und teuer ist. So wird zum einen zusätzliches Material für die Elemente benötigt, die die Spannbacken verstärken, zum anderen müssen die jeweiligen Bauteile einzeln hergestellt und anschließend verschweißt werden.

Die radial innerhalb der Hälfte, an den axialen Rändern angeordnete Kralleneinlagen von längskraftschlüssigen Sicherungskrallenmüssen ebenfalls verschweißt werden, wodurch die Schellen ausschließlich für einen vorher bestimmte Nennweite der Rohre eingesetzt werden können, da die Krallen fest positioniert sind. Zudem werden durch das Verschweißen das Material und die Form der Kralleneinlage einmalig festgelegt und es kann nicht flexibel auf spezielle Änderungswünsche, beispielweise bezüglich Materialwahl der Kralleneinlage, eingegangen werden. Zusätzlich bedeutet das Verschweißen der Kralleneinlage zusätzliche Arbeitsschritte und Kosten bei der Herstellung derartiger Sicherungskrallen. Zudem kann es zu einer vermehrten Korrosion kommen, welches die Haltbarkeit der Sicherungskrallen reduziert. Aufgabe der Erfindung ist es daher, die Nachteile des Standes der Technik zu beseitigen und eine Sicherungskralle bereitzustellen, die einfach und kostengünstig herzustellen ist. Ferner soll die Montage der Sicherungskralle vereinfacht werden.

Zudem soll eine Herstellung von Sicherungskrallen mit Kralleneinlagen ermöglicht werden, in der flexibel auf unterschiedliche Anforderungen, insbesondere Materialanforderungen und unterschiedliche Nennweiten der Rohre, reagiert werden kann.

Dies wird erfindungsgemäß durch eine Sicherungskralle mit den Merkmalen des Anspruchs 1. Die Unteransprüche 2 bis 12 betreffen bevorzugte Ausgestaltungen der Erfindung.

Der erfindungsgemäße Aufbau ermöglicht, dass keine weiteren Elemente in Form von Stabilisationsplatten und Ausrichtungselementen mehr vorgesehen werden müssen. An dessen Stelle tritt die Materialdoppelung durch Umbiegen der Laschen, wodurch die Bereiche der Spannbacken stabilisiert werden, auf die Kräfte beim Verspannen und Befestigen der Sicherungskralle wirken.

Aufgrund dieser Gestaltung keine zusätzlichen Elemente zur Stabilisation mehr benötigt. Vorzugsweise sind Sicken zur Erhöhung der Steifigkeit vorgesehen. Die Herstellung der Sicherungskralle ist somit weniger aufwendig und kostengünstiger.

Zudem ermöglicht das Umbiegen der Lasche, dass Material für separate Stabilisationselemente eingespart werden kann und das Material der Sicherungskralle möglichst effektiv eingesetzt wird. Auch dieses führt zur Reduktion der Herstellungskosten. Zusätzlich wird eine mögliche Korrosion der metallischen Bauteile zumindest reduziert oder sogar ausgeschlossen. Diese Korrosion kann durch unterschiedliche, metallische Werkstoffe der jeweiligen Bauteile zueinander, beispielweise Spannbacke zu Stabilisierungselement, verursacht werden. Zusätzlich kann die Materialstärke der gesamten Sicherungskralle reduziert werden, da in den hochbelasteten Bereichen der Spannbacken eine Materialverdoppelung vorliegt. Auch dieses reduziert die Materialkosten und somit die Herstellungskosten.

In einer bevorzugten Ausgestaltung ist vorgesehen, dass jede Spannbacke zumindest zwei Laschen aufweist. Liegen die zwei Laschen jeweils am axial entgegengesetzten Rand der Spannbacken, ergibt sich an zwei Stellen jeder Spannbacke eine Materialdopplung und somit auch zwei Bereichen in denen Öffnungen vorgesehen sein können, die Spannelemente aufnehmen. Folglich werden bei dieser Ausführungsform bevorzugt zwei Spannelemente vorgesehen, wodurch eine gleichmäßigere Verspannung und Befestigung der zwei Hälften erzielt wird.

Liegen die Laschen im gleichen Bereich der jeweiligen Spannbacke, wobei die jeweiligen freien Enden auf entgegengesetzten Seiten in axialer Richtung der Sicherungskralle ausgebildet sind, führt ein Umbiegen der freien Enden dazu, dass die Laschen überlappen und es zu einer Materialvervielfachung kommt. Dieses stabilisiert die belasteten Bereiche der Spannbacken, insbesondere die Öffnungen zum Verspannen und Befestigen des Spannelementes.

Erfindungsgemäß weisen die Spannbacken einen Rand auf, der senkrecht zu einer Fläche der Spannbacken gebogen ist und in Richtung der jeweils gegenüberliegenden Spannbacke gerichtet ist. Durch diesen Rand werden die Spannbacken versteift und stabilisiert. Durch die Ausformung und das Umbiegen der Laschen entstehen Leerräume innerhalb der Spannbacken, die kein Material mehr aufweisen. Der Rand wirkt einer Materialschwächung aufgrund dieser Freiräume entgegen. Zudem wird durch das Vorsehen eines Randes in Richtung der gegenüberliegenden Spannbacke verhindert, dass die Spannbacken eine scharfe Außenkante aufweisen, welches ein Verletzungsrisiko bei der Montage der Sicherungskralle darstellen würde.

In einer bevorzugten Ausführungsform liegt das freie Ende der mindestens einen Lasche auf einer Fläche des festen Endes der Lasche auf, wobei die Fläche der gegenüberliegenden Spannbacke einer zweiten Hälfte zugewandt ist. Die Lasche wird also derart umgebogen, dass das freie Ende auf der Unterseite der Spannbacke aufliegt.

In einer alternativen Ausführungsform ist die Lasche derart umgebogen, dass das freie Ende der Lasche auf dem festen Ende der Lasche auf der Unterseite der Spannbacke aufliegt.

In einer bevorzugten Fortbildung ist in einer der Öffnung im Bereich der Materialdopplung der Spannbacken ein Innengewinde eingeformt. Dadurch kann das Spannelement, welches von der Öffnung aufgenommen wird, direkt befestigt werden. Weist das Spannelement insbesondere eine Schraube auf, so kann diese mit dem Innengewinde in der Öffnung verschraubt werden, ohne dass weitere Verschraubungselemente notwendig sind. Dadurch können wiederrum die Kosten reduziert werden sowie die Herstellung und Montage vereinfacht werden.

Vorzugsweise wird die Öffnung im Bereich der Materialverdopplung der Spannbacken mittels Fließbohren hergestellt, dadurch steht mehr Material zum Einbringen eines Innengewindes zur Verfügung und die Gewindelänge kann vergrößert werden. Zudem wird durch eine höhere Gewindelänge ein verbessertes Verspannen der Hälften zueinander ermöglicht.

Ein Spannelement wird jeweils von zwei Öffnungen in zwei sich gegenüberliegenden Spannbacken gehalten, wodurch die zwei Hälften zueinander positioniert, verspannt und befestigt werden. Bei Verwendung von Schrauben als Spannelemente ist dann vorzugsweise die vom Schraubenkopf abgewandte Öffnung mit einem Innengewinde versehen, so dass ein Spannen der Hälften ohne weitere Elemente erfolgen kann.

Vorzugsweise ist das freie Ende der mindestens einen Lasche einer Spannbacke mehrfach umgebogen, wodurch eine Materialvervielfachung bewirkt wird. Dieses verstärkt den Bereich der Öffnungen und somit den Bereich der Spannelemente zusätzlich.

In einer bevorzugten Fortbildung weist der Bereich der Enden der Hälften eine oder mehrere Sicken auf. Sicken sind Vertiefungen in Bauteilen, welche die Steifigkeit des Bauteils erhöht. Die Sicken sind bevorzugt in einem Übergangsbereich zu den Spannbacken angeordnet. Insbesondere stehen die Sicken radial nach außen vor. In einer besonders bevorzugten Ausführungsform weisen die jeweiligen Enden der Hälften jeweils zwei Sicken auf.

Durch diese Ausgestaltung keine eine höhere Steifigkeit der Sicherungskralle bewirkt werden, ohne dass zusätzliches Material eingesetzt werden muss. Zusätzlich kann die eingesetzte Materialstärke im Vergleich zu einer Ausführungsform ohne Sicken geringer gewählt werden, wodurch die Material- und Herstellungskosten reduziert werden.

In einer bevorzugten Ausgestaltung ist an axialen Rändern der Hälften je eine teilkreisförmige Kralleneinlage angeordnet, wobei die Kralleneinlage mehrere in Umfangsrichtung nebeneinander angeordnete Krallen aufweist und die Kralleneinlagen der jeweils axial gegenüberstehenden Ränder aufeinander zu geneigt sind.

Die Kralleneinlagen halten die zu verbindenden Rohrenden, wobei die schräge Ausrichtung der Kralleneinlagen zueinander und somit zu einer Mittelachse bewirkt, dass die Kralleneinlagen die Rohrenden gegen axialen Zug sichern. Durch die teilkreisförmige Form wird zudem gewährleistet, dass die Sicherungskralle vollständig geöffnet werden kann, da jede Hälfte jeweils an beiden axialen Rändern eine teilkreisförmige Kralleneinlage aufweist, die nicht über die Hälfte hinaus reicht.

Bevorzugterweise sind die axialen Ränder der Hälften radial nach innen gebogen, wobei die Kralleneinlagen im Bereich einer Biegekante der Ränder an einer Innenseite der Hälften anliegen.

Durch diese Bauweise können die Kralleneinlagen einfach positioniert werden. Die Vorspannung der Kralleneinlagen sorgt für eine stabile Ausrichtung der Kralleneinlagen. Dabei werden die Kralleneinlagen nicht mit den Hälften verschweißt, wodurch die Herstellung vereinfacht und kostengünstiger ist.

Zudem können nicht-stoffschlüssig verbundene Kralleneinlagen flexibel ausgetauscht werden, wodurch auf unterschiedliche Anforderungen eingegangen werden kann, ohne dass jeweils eine neue Produktionslinie einer anderen Sicherungskralle initiiert werden muss. Die Sicherungskrallen werden ohne die Kralleneinlage hergestellt und die entsprechenden Kralleneinlagen können, je nach gewünschtem Material oder Größe der zu verbindenden Rohre angepasst und entsprechend eingesetzt werden. Durch die Vermeidung eines Verschweißens der Kralleneinlagen mit den Hälften sind zudem die Materialien der beiden Bauteile flexibel wählbar, da nicht alle Materialien miteinander verschweißt werden können. Zusätzlich wird eine Korrosion zwischen den Bauteilen aus unterschiedlichen metallischen Materialien oder insbesondere eine interkristalline Korrosion im Schweißbereich verhindert.

In einer bevorzugten Ausgestaltung werden die Kralleneinlagen jeweils durch ein oder mehrere Haltefinger in Position gehalten, wobei insbesondere ein Haltefinger mittig oder im jeweiligen Endbereich der jeweiligen Hälfte angeordnet ist. Besonders bevorzugt wird die Kralleneinlage durch zwei Haltefinger in Position gehalten, wobei insbesondere jeweils ein Haltefinger im jeweiligen Endbereich der jeweiligen Hälfte angeordnet ist.

Die Haltefinger drücken die Kralleneinlage gegen die axialen Ränder der Hälften, die als Begrenzung dienen und radial nach innen gebogen sind. Zudem werden die Enden der Kralleneinlagen im Endbereich der jeweiligen Hälften formschlüssig gehalten. Dadurch kann auf Verschweißen der Kralleneinlage mit den Hälften verzichtet werden, wodurch die Kralleneinlagen ausgetauscht werden können. Eine flexible Materialwahl ist insbesondere dann wichtig, wenn hohe Anforderungen an die Materialien hinsichtlich Korrosionsbeständigkeit oder dauerhafte Stabilität gestellt werden.

Vorzugsweise ist der Haltefinger aus der jeweiligen Hälfte herausgeformt. Auch hierbei handelt es sich um eine Art Lasche, mit einem freien Ende, welches in Richtung des festen Endes und somit in Richtung des nächstliegenden axialen Randes der jeweiligen Hälfte gebogen wird. Dadurch entsteht eine Art Öse, welche die Kralleneinlage hält. Diese Bauweise ermöglicht es, dass der Haltefinger direkt aus dem Material des Bandes herausgeformt werden kann und nicht anschließend nach der Herstellung der Sicherungskralle angeschweißt werden muss. Hierdurch wird die Herstellung vereinfacht und kostengünstiger.

In einer bevorzugten Fortbildung ist für jede Kralleneinlage mindestens ein Stabilisationselement vorgesehen, wobei das Stabilisationselement die Krallen einer Kralleneinlage in einer im Wesentlichen radial nach innen gerichteten Orientierung stabilisiert.

Diese Stabilisationselemente verhindern, dass beispielweise bei der Montage die Krallen der Kralleneinlage flach an die Hälfte angedrückt werden, wodurch die Funktion der Zugsicherung in Axialrichtung eingeschränkt wäre. Dadurch kann eine fehlerfreie Montage der Sicherungskralle gewährleistet werden. Dieses Stabilisationselement ist insbesondere aus der jeweiligen Hälfte herausgeformt, wobei ein freies Ende des Stabilisationselementes aus dem Band der jeweiligen Hälfte radial nach innen gebogen wird.

Das jeweilige Stabilisationselement weist bevorzugt eine Sicke auf, wobei das Material insbesondere radial nach innen gedrückt ist. Diese Sicke versteift das Stabilisationselement zuverlässig, wodurch auch an dieser Stelle keine Schweißverbindung notwendig ist.

Vorzugsweise unterstützt ein Stützelement zudem die Orientierung des Stabilisationselements radial nach innen. Durch diese Bauweise muss auch das Stabilisationselement nicht an die vorher gefertigte Sicherungskralle angeschweißt werden, sondern kann aus dem bestehenden Material der Hälften herausgeformt werden. Die Herstellung einer derartigen Sicherungskralle ist vereinfacht und kostengünstiger als bei bekannten Sicherungskrallen.

Vorzugsweise weisen die Hälften Aussparungen auf, wobei insbesondere zumindest Ränder der Aussparung in Umfangsrichtung radial nach innen gebogen sind.

Diese Aussparungen in den Hälften können Verschlusselemente von Verbindern aufnehmen. Die Verbinder werden unter der Sicherungskralle als dichtendes Bauteil zwischen oder in Radialrichtung auf zwei zu verbindenden Rohren angeordnet. Die Sicherungskralle umschließt den Verbinder und bewirkt eine Zugkraftsicherung. Somit kann durch diese Ausführungsform eine dichte und zugkraftgesicherte Verbindung hergestellt werden.

Zudem führen die Aussparungen zu einer Reduktion des benötigten Materials, welches die Herstellungskosten und das Gewicht der Sicherungskralle reduziert.

Zudem können Rohrenden mit Befestigungselementen in diesem Bereich eingehakt werden, wodurch eine zusätzliche Befestigung der Sicherungskralle zu den Rohren erzielt werden kann. Ein derartiges Einhaken kann beispielweise durch eine Drehbewegung der Sicherungskralle erfolgen.

Zusätzlich wird durch Vorsehen der Aussparungen eine notwendige Elastizität der Sicherungskralle gewährleistet, welche die Montage der Sicherungskralle vereinfacht.

Die Ränder der Aussparung, die in Umfangsrichtung verlaufen, führen zum einen zu einer Versteifung des Bereiches um die Aussparung. Zum anderen dienen die radial nach innen gebogenen Ränder als seitliche Begrenzung für die Kralleneinlagen. In Kombination mit den radial nach innen gebogenen axialen Rändern der Hälften stellen die nach innen gebogenen Ränder der Aussparungen eine Art Positionierungskanal dar. Dieses dient der Ausrichtung der Kralleneinlagen, ohne dass diese fest verschweißt werden müssen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: erfindungsgemäße Sicherungskralle,
- Fig. 2: vergrößerte Ansicht auf eine Spannbacke 6 einer erfindungsgemäßen Sicherungskralle,
- Fig. 3: Ansicht auf eine Hälfte 3, 4 mit Kralleneinlage 17,
- Fig. 4: Vergrößerte Ansicht auf Spannbacke 6 und Hälfte 3, 4 mit Kralleneinlage 17.

- Fig. 5: Ansicht auf eine alternative Ausführungsform einer Hälfte 3, 4.

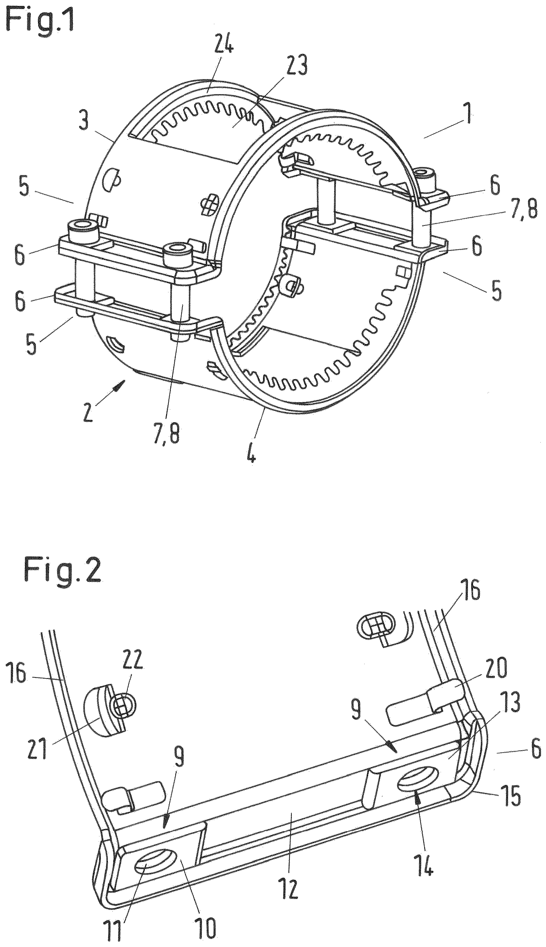

Fig. 1 zeigt eine erfindungsgemäße Sicherungskralle 1 mit einem Band 2, welches zwei Hälften 3, 4 umfasst. An den Enden 5 der Hälften 3, 4 sind jeweils Spannbacken 6 angeordnet, wobei jeweils gegenüberliegende Spannbacken 6 der zwei Hälften 3, 4 über mindestens ein Spannelement 7 verbunden sind. Hier dargestellt sind Spannelemente 7 in Form von Schrauben 8, wobei in der in Fig. 1 gezeigten Ausführungsform zwei Spannelemente 7 pro Spannbackenpaar vorgesehen sind.

Fig. 2 zeigt eine vergrößerte Ansicht einer Spannbacke 6. Im dargestellten Ausführungsbeispiel weist die Spannbacke 6 zwei Laschen 9 auf, wobei jeweils die freien Enden 10 so umgebogen sind, dass das freie Ende 10 auf dem festen Ende 11 derselben Lasche 9 aufliegt. Insbesondere liegt das freie Ende 10 der Lasche 9 auf der Fläche des festen Endes 11 der Lasche 9 auf, die der gegenüberliegenden Spannbacke 6 zugewandt ist. Durch das Umbiegen des freien Endes 10 der Laschen 9 entsteht ein Leerraum 12 sowie eine Materialverdoppelung 13, wobei im Bereich der Materialverdoppelung 13 Öffnungen 14 vorgesehen sind, die Spannelemente 7 aufnehmen.

Zur Stabilisierung und als Griffschutz ist vorgesehen, dass die Spannbacke 6 einen Rand 15 aufweist, der senkrecht zur Fläche der Spannbacke 6 gebogen ist. Dabei ist der Rand15 bevorzugt in Richtung der gegenüberliegenden Spannbacke 6 gebogen. Auch die axialen Ränder 16 der Hälften 3, 4 sind bevorzugt radial nach innen gebogen.

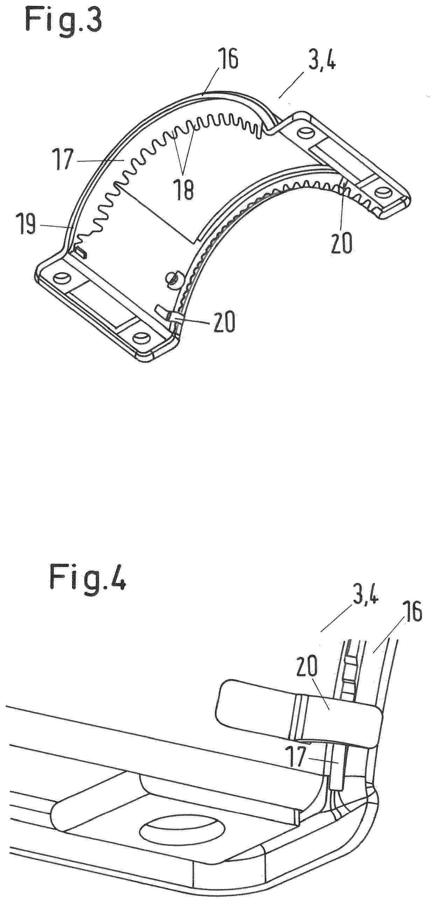

In Fig. 3 ist eine Hälfte 3, 4 gezeigt, die an den axialen Rändern 16 der Hälfte 3, 4 je eine teilkreisförmige Kralleneinlage 17 aufweist. Diese Kralleneinlage 17 umfasst mehrere in Umfangsrichtung nebeneinander angeordnete Krallen 18, die miteinander verbunden sind. Die jeweils an den gegenüberliegenden axialen Rändern 16 angeordneten Kralleneinlagen 17 sind aufeinander zu geneigt. Durch die radial nach innen gebogenen axialen Ränder 16 liegt die Kralleneinlage 17 im Bereich einer Biegekante 19 an. Zusätzlich weisen die Kralleneinlagen 17 eine radiale Vorspannung auf, wodurch sie in Position gehalten werden.

Bevorzugt sind Haltefinger 20 vorgesehen, die im jeweiligen Endbereich einer Hälfte 3, 4 angeordnet sind. Diese Haltefinger 20 sind aus der jeweiligen Hälfte 3, 4 herausgeformt und drücken die Kralleneinlage 17 gegen die radial nach innen geformten axialen Ränder 16. Dieses ist in vergrößerter Ansicht in Fig. 4 gezeigt.

Zudem ist bevorzugt mindestens ein Stabilisationselement 21 vorgesehen (Fig. 2), welches die Krallen 18 einer Kralleneinlage 17 in einer im Wesentlichen radial nach innen gerichteten Orientierung stabilisiert. Das Stabilisationselement 21 ist ebenfalls aus dem Material der jeweiligen Hälfte 3, 4 herausgeformt. Ein Stützelement 22 unterstützt die Ausrichtung des Stabilisationselements 21 in einer Orientierung radial nach innen. Das Stützelement 22 kann beispielweise aus einer ovalen Verstärkung im Material bestehen. Ein solches Stützelement 22 ist beispielweise in Fig. 2 gezeigt.

In einer bevorzugten Ausführung weist die Sicherungskralle 1 Aussparungen 23 auf, die zum einen die zur Herstellung der Sicherungskralle benötigte Materialmenge reduzieren und zum anderen der Befestigung von Rohren dienen. Dabei ist insbesondere vorgesehen, dass die Ränder 24 der Aussparung 23 in Umfangsrichtung radial nach innen gebogen sind, wodurch ein Positionierungskanal für die Kralleneinlagen 17 ausgebildet wird. Diese Merkmale sind beispielweise in Fig. 1 gezeigt.

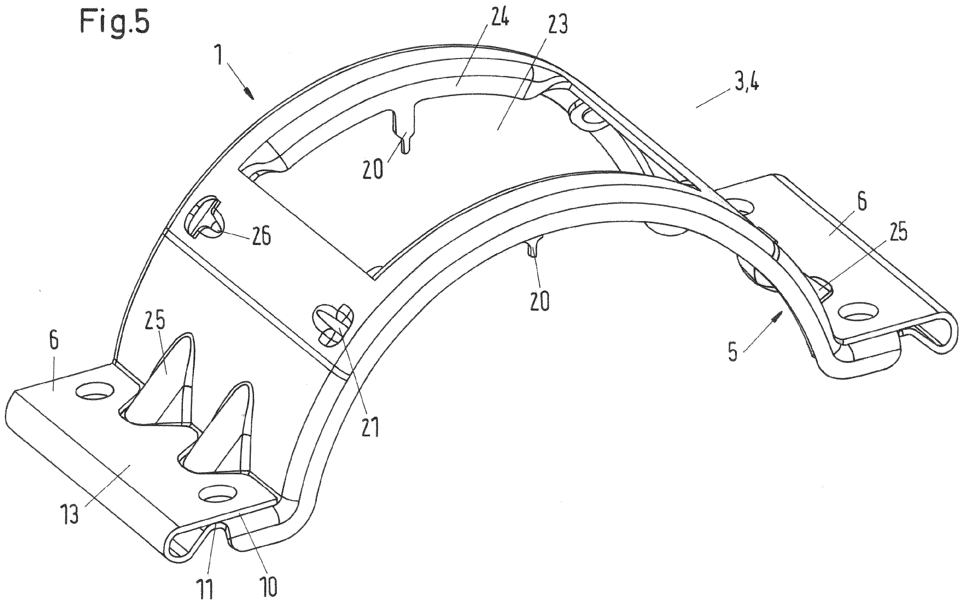

Fig. 5 zeigt eine alternative Ausführungsform einer Hälfte 3, 4 einer erfindungsgemäßen Sicherungskralle 1. Die Hälfte 3, 4 weist an ihren Enden 5 jeweils eine Spannbacke 6 auf. Diese Spannbacken 6 weisen jeweils eine Lasche 9 auf, die aus dem Material der Spannbacke 6 derart ausgeformt ist, dass das freie Ende 10 auf dem festen Ende 11 der Lasche 9 aufliegt. Die Lasche 9 erstreckt sich über die gesamte Breite der Spannbacke 6 in Axialrichtung, so dass der im Wesentlichen gesamte Bereich der Spannbacke 6 eine Materialverdopplung 13 aufweist. Bevorzugt sind zwei Öffnungen 14 im Bereich der Materialverdopplung 13 zum Durchführen jeweils eines Spannelements 7 vorgesehen.

Zusätzlich weist die Sicherungskralle 1, insbesondere der Bereich der Spannbacken 6, Sicken 25 auf, die zu einer zusätzlichen Steifigkeit der Sicherungskralle 1 führen. Dieses Sicken 25 sind aus dem Material der Sicherungskralle 1 radial nach außen gedrückt. In der in Fig. 5 gezeigten Ausführungsform sind je Spannbacke 6 zwei Sicken 25 vorgesehen. Zudem ist das freie Ende 9 derart ausgeformt, dass es den Bereich der Sicken 25 ausspart.

Vorzugsweise können auch die Stabilisationselemente 21 auch Sicken 26 aufweisen, welche die Stabilisationselemente 21 versteifen. Dabei sind die Sicken 26 der Stabilisationselemente 21 in Radialrichtung nach innen ausgeformt.

Zudem ist hier ein Haltefinger 20 gezeigt, der an den Rand 24 der Aussparung 23 angeformt und im Wesentlichen mittig an der Hälfte 3, 4 in Umfangsrichtung angeordnet ist. In Fig. 5 ist keine Kralleneinlage gezeigt. Sobald im Herstellungs- und/oder Montageprozess eine Kralleneinlage 17 eingesetzt wird, wird der der Haltefinger 20 derart umgebogen, dass der Haltefinger 20 die Kralleneinlage 17 in Position hält.

### Bezugszeichenliste

- 1: Sicherungskralle
- 2: Band
- 3: Hälfte
- 4: Hälfte
- 5: Ende der Hälften 3, 4
- 6: Spannbacke
- 7: Spannelement
- 8: Schraube
- 9: Lasche
- 10: Freies Ende der Lasche 9
- 11: Festes Ende der Lasche 9
- 12: Leerraum
- 13: Materialverdoppelung
- 14: Öffnung
- 15: Rand der Spannbacke 6
- 16: Axialer Rand der Hälften 3, 4
- 17: Kralleneinlage
- 18: Krallen
- 19: Biegekante
- 20: Haltefinger
- 21: Stabilisationselement
- 22: Stützelement
- 23: Aussparung
- 24: Rand der Aussparung 23
- 25: Sicken
- 26: Sicken am Stabilisationselement 21

## Patentansprüche

1. Sicherungskralle (1) mit einem Band (2), das zwei Hälften (3, 4) aufweist, die an ihren Enden (5) jeweils eine Spannbacke (6) aufweisen, wobei die gegenüberliegenden Spannbacken (6) der zwei Hälften (3, 4) jeweils über mindestens ein Spannelement (7) miteinander verbunden sind und die Spannbacken (6) jeweils mindestens eine Lasche (9) mit einem festen Ende (11) und freien Ende (10) aufweisen, wobei das freie Ende (10) derart umgebogen ist, dass das freie Ende (10) auf dem festen Ende (11) der jeweiligen Lasche (9) aufliegt und eine Materialdopplung (13) bildet, wobei im Bereich der Materialdopplung (13) zumindest eine Öffnung (14) zum Durchführen des mindestens einen Spannelements (7) ausgebildet ist, **dadurch gekennzeichnet, dass** die Spannbacken (6) einen Rand (15) aufweisen, der senkrecht zu einer Fläche der Spannbacken gebogen ist und der in Richtung der jeweils gegenüberliegenden Spannbacke (6) gerichtet ist.

2. Sicherungskralle (1) nach Anspruch 1, **dadurch gekennzeichnet, dass** jede Spannbacke (6) zumindest zwei Laschen (9) aufweist.

3. Sicherungskralle (1) nach einem der vorangegangenen Ansprüche, **dadurch gekennzeichnet, dass** das freie Ende (10) der mindestens einen Lasche (9) auf einer Fläche des festen Endes (11) der Lasche (9) aufliegt, wobei das freie Ende (10) der Lasche (9) der gegenüberliegenden Spannbacke (6) der zweiten Hälfte (3, 4) zugewandt ist.

4. Sicherungskralle (1) nach einem der vorangegangenen Ansprüche, **dadurch gekennzeichnet, dass** zumindest in einer der Öffnung (14) im Bereich der Materialdopplung (13) der Spannbacken (6) ein Innengewinde eingeformt ist.

5. Sicherungskralle (1) nach einem der vorangegangenen Ansprüche, **dadurch gekennzeichnet, dass** das freie Ende (10) der mindestens einen Lasche (9) einer Spannbacke (6) mehrfach umgebogen ist und so eine Materialvervielfachung bewirkt.

6. Sicherungskralle (1) nach einem der vorangegangenen Ansprüche, **dadurch gekennzeichnet, dass** das an axialen Rändern (16) der Hälften (3, 4) je eine teilkreisförmige Kralleneinlage (17) angeordnet ist, wobei die Kralleneinlage (17) mehrere nebeneinander angeordnete Krallen (18) aufweist und die Kralleneinlagen (17) der jeweils axial gegenüberstehenden Ränder (16) aufeinander zu geneigt sind.

7. Sicherungskralle (1) nach Anspruch 6, **dadurch gekennzeichnet, dass** die axialen Ränder (16) der Hälften (3, 4) radial nach innen gebogen sind, wobei die Kralleneinlagen (17) im Bereich einer Biegekante (19) der Ränder an einer Innenseite der Hälften anliegen.

8. Sicherungskralle (1) nach Anspruch 6 oder 7, **dadurch gekennzeichnet, dass** die Kralleneinlagen (17) jeweils durch ein oder mehrere Haltefinger (20) in Position gehalten werden, wobei insbesondere ein Haltefinger (20) mittig oder im jeweiligen Endbereich der jeweiligen Hälfte (3, 4) angeordnet ist.

9. Sicherungskralle (1) nach Anspruch 8, **dadurch gekennzeichnet, dass** die Haltefinger (20) aus der jeweiligen Hälfte (3, 4) herausgeformt sind.

10. Sicherungskralle (1) nach einem der Ansprüche 6 bis 9, **dadurch gekennzeichnet, dass** für jede Kralleneinlage (17) mindestens ein Stabilisationselement (21) vorgesehen ist, wobei das Stabilisationselement (21) die Krallen (18) einer Kralleneinlage (17) in einer im Wesentlichen radial nach innen gerichteten Orientierung stabilisiert.

11. Sicherungskralle (1) nach Anspruch 10, **dadurch gekennzeichnet, dass** das Stabilisationselement (21) aus der jeweiligen Hälfte (3, 4) herausgeformt ist.

12. Sicherungskralle (1) nach einem der vorangegangenen Ansprüche, **dadurch gekennzeichnet, dass** das die Hälften (3, 4) Aussparungen (23) aufweisen, wobei zumindest Ränder (24) der Aussparung (23) in Umfangsrichtung radial nach innen gebogen sind.

## Claims

1. Clawed securing device (1) comprising a band (2) having two halves (3, 4), which at their ends (5) have a respective clamping jaw (6), wherein the opposite clamping jaws (6) of the two halves (3, 4) are respectively connected to one another via at least one clamping element (7) and the clamping jaws (6) respectively have at least one tab (9) having a fixed end (11) and free end (10), wherein the free end (10) is bent over in such a way that the free end (10) rests on the fixed end (11) of the respective tab (9) and forms a material doubling (13), wherein in the region of the material doubling (13) there is formed at least one opening (14) for the leadthrough of the at least one clamping element (7), **characterized in that** the clamping jaws (6) have a rim (15), which is bent perpendicularly in relation to a face of the clamping jaws and is directed in the direction of the respectively opposite clamping jaw (6) .

2. Clawed securing device (1) according to Claim 1, **characterized in that** each clamping jaw (6) has at least two tabs (9).

3. Clawed securing device (1) according to either of the preceding claims, **characterized in that** the free end (10) of the at least one tab (9) rests on a face of the fixed end (11) of the tab (9), wherein the free end (10) of the tab (9) faces toward the opposite clamping jaw (6) of the second half (3, 4).

4. Clawed securing device (1) according to one of the preceding claims, **characterized in that** at least in one of the openings (14) in the region of the material doubling (13) of the clamping jaws (6) there is formed an internal thread.

5. Clawed securing device (1) according to one of the preceding claims, **characterized in that** the free end (10) of the at least one tab (9) of a clamping jaw (6) is bent over multiple times and thus brings about a multiplication of the material.

6. Clawed securing device (1) according to one of the preceding claims, **characterized in that** on axial rims (16) of the halves (3, 4) there is arranged a respective clawed insert (17) of partly circular form, wherein the clawed insert (17) has a plurality of claws (18) arranged next to one another and the clawed inserts (17) of the respectively axially opposite rims (16) are inclined towards one another.

7. Clawed securing device (1) according to Claim 6, **characterized in that** the axial rims (16) of the halves (3, 4) are bent radially inwards, wherein the clawed inserts (17), in the region of a bending edge (19) of the rims, bear against an inner side of the halves.

8. Clawed securing device (1) according to Claim 6 or 7, **characterized in that** the clawed inserts (17) are respectively held in position by one or more holding fingers (20), wherein in particular a holding finger (20) is arranged in the middle or in the respective end region of the respective half (3, 4).

9. Clawed securing device (1) according to Claim 8, **characterized in that** the holding fingers (20) are formed out of the respective half (3, 4).

10. Clawed securing device (1) according to one of Claims 6 to 9, **characterized in that** for each clawed insert (17) at least one stabilization element (21) is provided, wherein the stabilization element (21) stabilizes the claws (18) of a clawed insert (17) in a substantially radially inwardly directed orientation.

11. Clawed securing device (1) according to Claim 10, **characterized in that** the stabilization element (21) is formed out of the respective half (3, 4).

12. Clawed securing device (1) according to one of the preceding claims, **characterized in that** the halves (3, 4) have apertures (23), wherein at least rims (24) of the aperture (23) are bent radially inwards in the circumferential direction.

## Revendications

1. Griffe de fixation (1) comprenant une bande (2), qui présente deux moitiés (3, 4), qui présentent respectivement une mâchoire de serrage (6) à leurs extrémités (5), les mâchoires de serrage opposées (6) des deux moitiés (3, 4) étant respectivement reliées entre elles par l'intermédiaire d'au moins un élément de serrage (7), et les mâchoires de serrage (6) présentant respectivement au moins une patte (9) comprenant une extrémité fixe (11) et une extrémité libre (10), l'extrémité libre (10) étant repliée de telle sorte que l'extrémité libre (10) repose sur l'extrémité fixe (11) de la patte respective (9) et forme un doublement de matériau (13), au moins une ouverture (14) étant formée dans la zone du doublement de matériau (13) pour le passage de l'au moins un élément de serrage (7), **caractérisée en ce que** les mâchoires de serrage (6) présentent un bord (15), qui est plié perpendiculairement à une surface des mâchoires de serrage et qui est dirigé en direction de la mâchoire de serrage opposée respective (6).

2. Griffe de fixation (1) selon la revendication 1, **caractérisée en ce que** chaque mâchoire de serrage (6) présente au moins deux pattes (9).

3. Griffe de fixation (1) selon l'une quelconque des revendications précédentes, **caractérisée en ce que** l'extrémité libre (10) de l'au moins une patte (9) repose sur une surface de l'extrémité fixe (11) de la patte (9), l'extrémité libre (10) de la patte (9) étant tournée vers la mâchoire de serrage opposée (6) de la deuxième moitié (3, 4).

4. Griffe de fixation (1) selon l'une quelconque des revendications précédentes, **caractérisée en ce qu'**un filetage intérieur est formé au moins dans une des ouvertures (14) dans la zone du doublement de matériau (13) des mâchoires de serrage (6).

5. Griffe de fixation (1) selon l'une quelconque des revendications précédentes, **caractérisée en ce que** l'extrémité libre (10) de l'au moins une patte (9) d'une mâchoire de serrage (6) est repliée plusieurs fois et produit ainsi une multiplication de matériau.

6. Griffe de fixation (1) selon l'une quelconque des revendications précédentes, **caractérisée en ce qu'**un insert de griffe (17) en forme de cercle partiel est agencé sur chacun des bords axiaux (16) des moitiés (3, 4), l'insert de griffe (17) présentant plusieurs griffes (18) agencées les unes à côté des autres et les inserts de griffe (17) des bords (16) respectivement opposés axialement étant inclinés les uns vers les autres.

7. Griffe de fixation (1) selon la revendication 6, **caractérisée en ce que** les bords axiaux (16) des moitiés (3, 4) sont pliés radialement vers l'intérieur, les inserts de griffe (17) reposant sur un côté intérieur des moitiés dans la zone d'une arête de pliage (19) des bords.

8. Griffe de fixation (1) selon la revendication 6 ou 7, **caractérisée en ce que** les inserts de griffe (17) sont respectivement maintenus en position par un ou plusieurs doigts de maintien (20), un doigt de maintien (20) étant notamment agencé au milieu ou dans la zone d'extrémité respective de la moitié respective (3, 4).

9. Griffe de fixation (1) selon la revendication 8, **caractérisée en ce que** les doigts de maintien (20) sont formés à partir de la moitié respective (3, 4).

10. Griffe de fixation (1) selon l'une quelconque des revendications 6 à 9, **caractérisée en ce qu'**au moins un élément de stabilisation (21) est prévu pour chaque insert de griffe (17), l'élément de stabilisation (21) stabilisant les griffes (18) d'un insert de griffe (17) dans une orientation dirigée essentiellement radialement vers l'intérieur.

11. Griffe de fixation (1) selon la revendication 10, **caractérisée en ce que** l'élément de stabilisation (21) est formé à partir de la moitié respective (3, 4).

12. Griffe de fixation (1) selon l'une quelconque des revendications précédentes, **caractérisée en ce que** les moitiés (3, 4) présentent des évidements (23), au moins des bords (24) de l'évidement (23) étant pliés radialement vers l'intérieur dans la direction circonférentielle.
